# EUROPÄISCHE PATENTSCHRIFT

(11) **EP 3 057 402 B1**
(45) Veröffentlichungstag und Bekanntmachung des Hinweises auf die Patenterteilung: **13.06.2018**
(21) Anmeldenummer: 14823887.6
(22) Anmeldetag: 15.10.2014
(51) Int. Cl.: A01C 7/04

(54) **SÄHERZ FÜR EINZELKORNSÄMASCHINE**
SEED METER FOR SINGLE GRAIN SEEDER
DOSEUR DE GRAINES POUR SEMOIR MONOGRAINE

(30) Priorität: 15.10.2013 DE 102013111356
(43) Veröffentlichungstag der Anmeldung: 24.08.2016
(73) Patentinhaber: Lemken GmbH & Co. KG, 46519 Alpen (DE)
(72) Erfinder: BERENDSEN, Mark, NL-7044 AJ Lengel (NL); BERGERFURTH, Dennis, 46459 Rees (DE); GEBBEKEN, Martin, 46519 Alpen (DE); GERAATS, Marcel, 41334 Nettetal (DE); GOTZEN, Christian, 41751 Viersen (DE); LUKAS, Thomas, 48683 Ahaus-Wüllen (DE); PAESSENS, Christian, 47661 Issum (DE); WERRIES, Dieter, 46519 Alpen (DE)
(74) Vertreter: Schulte & Schulte
(86) Internationale Anmeldenummer: PCT/DE2014/100367
(87) Internationale Veröffentlichungsnummer: WO 2015/055180

(56) Entgegenhaltungen:
- EP-A1- 1 752 028
- EP-A2- 2 225 928
- WO-A1-2010/059101
- WO-A2-03/055291
- DE-A1-102006 031 272
- DE-A1-102009 043 881

## Beschreibung

Die Erfindung betrifft eine pneumatische Einzelkornsämaschine mit einer Mehrzahl von Säherzen zur Aufnahme von drehbar angeordneten, einer Druckdifferenz zwischen ihrem Innenraum und ihrem Außenraum ausgesetzten und eine Vielzahl von zur Anlagerung von Saatgut dienenden Löchern aufweisenden Vereinzelungsvorrichtungen.

Außerdem betrifft die Erfindung ein Säherz für eine pneumatische Einzelkornsämaschine zur Aufnahme von drehbar angeordneten, einer Druckdifferenz zwischen ihrem Innenraum und ihrem Außenraum ausgesetzten und eine Vielzahl von zur Anlagerung von Saatgut dienenden Löchern aufweisenden Vereinzelungsvorrichtungen.

Pneumatische Einzelkornsämaschinen, wie sie etwa aus der DE 10 2005 051 527 A1 bekannt sind, werden in der Landwirtschaft eingesetzt, um das Saatgut einzeln und in gleichmäßigen Abständen in den Boden einbringen zu können. Eine besondere Rolle fällt dabei den Säherzen zu, die in mehreren Säreihen in der Maschine nebeneinander angeordnet sind. Ein Säherz dient dabei zur Aufnahme einer Vereinzelungsvorrichtung wie z. B. einer Trommel oder einer Scheibe, auf die eine Druckdifferenz zwischen ihrem Innen- und ihrem Außenraum zwecks Anlagerung und gezieltem Abführen des Saatgutes zum Säschar ausgeübt wird. Bisher bekannte Einzelkornsämaschinen sind jedoch nicht zur Herstellung von gespreizten Saatgutreihen bei maximaler Geschwindigkeit und optimaler Qualität geeignet, also zur Herstellung zweier zueinander versetzter Doppelreihen von Saatgut in einem Arbeitsgang. Aus der WO 03/055291 ist ein Säherz für eine Einzelkornsämaschine mit einer Vielzahl von zur Anlagerung von Saatgut dienenden Löchern aufweisenden Vereinzelungsvorrichtung bekannt. Die WO 03/055291 verfolgt das Ziel, die zueinander versetzten Löcher mit möglichst großen Abständen vorzusehen, um die Vereinzelung zu verbessern bzw. im Umkehrschluss die Vereinzelungsvorrichtung kleiner halten zu können. Dies führt von dem Konzept einer gespreizten Saatgutreihe oder Doppelreihe weg. Bekannt ist aus der EP 1 752 028 eine Vereinzelungstrommel, die aus Ringsegmenten zusammengesetzt ist. Jeweils ein Segmentpaar bildet dabei eine dachförmige Struktur mit zwei seitlich versetzen Lochreihen mit ähnlicher Zielsetzung wie bei der WO 03/055291.

Damit stellt sich der vorliegenden Erfindung die Aufgabe, ein Säherz für eine pneumatische Einzelkornsämaschine für den Einsatz in der Landwirtschaft zu schaffen, das zu einer besonders schnellen, präzisen und effektiven Erzeugung einer gespreizten Saatgutreihe geeignet ist.

Diese Aufgabe wird erfindungsgemäß dadurch gelöst, dass die Vereinzelungsvorrichtung durch ein Paar an ihrem Außenrand miteinander verbundener Vereinzelungsteller gebildet ist, die zur Erzeugung einer gespreizten Saatgutreihe in tangentialer Richtung versetzt zueinander angeordnet und separaten Auslässen zur Abführung des Saatgutes aus dem Säherz in Richtung Säschar zugeordnet sind.

Bei einem solchen Säherz für eine Einzelkornsämaschine dient ein Paar von an ihrem Außenrand direkt oder durch eine parallel zur Rotationsachse verlaufende Wandung miteinander verbundener Vereinzelungsteller als eine besonders präzise arbeitende Vereinzelungsvorrichtung. Um die gespreizte Saatgutreihe abbilden zu können, sind die beiden Vereinzelungsteller in tangentialer Richtung zueinander versetzt. Das Säherz verfügt über zwei Auslässe zur Abführung des Saatgutes aus dem Säherz in Richtung Säschar, wobei das Saatgut aus dem linken Teller in den korrespondierenden linken Auslass und das Saatgut aus dem rechten Teller in den korrespondierenden rechten Auslass geschossen wird. Insofern ist der tangentiale Versatz zwischen beiden Tellern auf die Anordnung der beiden Auslässe abgestimmt.

Besonders zweckmäßig ist es, wenn die beiden Vereinzelungsteller in einem Maß versetzt zueinander angeordnet sind, das dem halben Abstand zwischen zwei Löchern entspricht. Damit sind die beiden Teller jeweils genau auf die beiden Auslässe aus dem Säherz heraus in Richtung Säschar ausgerichtet, um die Ausbildung von gespreizten Saatgutreihen möglich zu machen. Verglichen mit einer Vereinzelungstrommel etwa baut eine solche, zwei Teller aufweisende Vereinzelungsvorrichtung sehr kompakt, so dass sie sich auch vollständig in einem Gehäuse unterbringen lässt. Dies bringt insbesondere auch wegen der Druckluftverhältnisse erkennbare Vorteile mit sich.

Was den Aufbau der Vereinzelungsteller betrifft, wird nach einer ersten Variante vorgeschlagen, dass die Vereinzelungsteller über einen zumindest annähernd parallel zur Rotationsebene der Teller verlaufenden Innenabschnitt und einen geneigt angeordneten und die Löcher aufweisenden Außenabschnitt verfügen. Die Stirnseite des Tellers weist folglich einen Innen- und einen Außenabschnitt auf, während Letzterer zugleich einen Teil der Umfangsfläche bildet bzw. in diese übergeht. Es gilt zwecks Ausnutzung der Druckdifferenz zwischen Innen- und Außenraum des Tellerpaars einen entsprechenden Hohlraum zwischen den Tellern zu schaffen. Gleichzeitig besteht eine ganz zentrale Vorgabe der Erfindung darin, das Anlagern des Saatgutes an bzw. in den Löchern ebenso zu unterstützen wie ein zielgerichtetes Abführen nach Unterbrechung des Luftstroms zu gewährleisten.

Dass die Vereinzelungsteller über eine parallel zur Rotationsebene der Teller verlaufende und die Löcher aufweisende Stirnseite verfügen, stellt dann eine weitere Variante dar, bei der die Vereinzelungsteller auch über sich in Richtung Rotationsachse erstreckende Abschnitte bzw. Wandungen verfügen. Im Bereich dieser Abschnitte sind die beiden Vereinzelungsteller dann auch über geeignete Mittel miteinander verbunden.

Wenn der mittige Abstand der Auslässe und/oder der daran angeschlossenen Leitungen zumindest annähernd dem lateralen Abstand der herzustellenden gespreizten Saatgutreihe entspricht, wird das Saatgut vorzugsweise senkrecht nach unten und dabei ohne nennenswerte Kollisionen mit der Auslass- oder Leitungsinnenwand in den Bereich der Saatgutablage geführt. Die Richtungsumkehr des Saatgutes innerhalb der Auslassleitung wird auf ein Minimum reduziert und vermeidet unnötige Kollisionsverzögerungen während des Saatguttransportes, wodurch zugleich die Ablagegenauigkeit innerhalb der Saatgutreihe deutlich gesteigert wird.

Eine besonders effektive Montagehilfe für zwei Vereinzelungsteller ist realisiert, wenn diese paarweise über Befestigungsmittel so verbindbar sind, dass die in gegenüber liegenden Vereinzelungstellern vorgesehenen Löcher im montierten Zustand versetzt zueinander angeordnet sind. Die Anordnung der gleichmäßig über den Rand der Teller verteilten Befestigungsmittel bzw. der für diese vorgesehenen Aufnahmen lässt quasi nur das Zusammensetzen in dieser Positionierung zu.

Um eben auch schnelle und effektive Schüsse des Saatgutes durch die beiden Auslässe sicherzustellen, ist daran gedacht, dass das Paar von Vereinzelungstellern mit einem innenliegenden Mechanismus zur Luftunterbrechung ausgerüstet ist. Dabei handelt es sich etwa um ein an einem Arm gelagertes Rad. Sobald das Rad ein Loch auf dem Teller von innen überdeckt, kommt es zur Unterbrechung des Luftstroms und damit zum Lösen des Korns aus dem jeweiligen Loch in dem Teller, so dass es dem Auslass zu den Säscharen zugeführt werden kann.

Eine weitere bevorzugte Ausführungsform der Erfindung sieht vor, dass der innenliegende Mechanismus zur Luftunterbrechung als gefederte oder zumindest teilweise elastisch ausgebildete Rolle oder als gefederter Rollenmechanismus ausgeführt ist, um eine effektive und zuverlässige Unterbrechung des Luftstroms zu gewährleisten.

Durch eine paarweise Anordnung der Rollen ist eine optimale Anstellmöglichkeit der jeweiligen Rolle zum zugehörigen Vereinzelungsteller gegeben. Bei Wahl einer geeigneten Rollenanstellung oder eines geeigneten Rollendurchmessers können sich diese an der den Innenflächen der Vereinzelungsteller gegenüberliegenden Rollenflächen berühren. Die resultierenden Lagerkräfte der Rollendruckkraft gegen die Vereinzelungsteller heben sich damit auf und belasten nicht die Lagerung.

Sind die Rollen mit zu den Löchern der Vereinzelungsteller passenden Erhebungen versehen, wird die Kornablösung am Vereinzelungsteller verbessert. Durch zu den Erhebungen passende Ausnehmungen in den Zwischenräumen der Rollenerhebungen können gegenüberliegende Rollenpaare auch an ihrer zuvor beschriebenen, rückwärtigen Kontaktfläche formschlüssig ineinander greifen und bilden einen Zwangsantrieb der Rollen zueinander in Abhängigkeit der zueinander versetzen Lochteilung der jeweiligen Vereinzelungsteller.

Eine weitere vorteilhafte Ausführungsform der Erfindung sieht vor, dass die Vereinzelungsluftzufuhr zugleich als Saatgutförderluft dient, dass also ein und derselbe Luftstrom als Zuluft in das Säherz, zur Anlagerung des Saatgutes an den Löchern und/oder zur Abführung des Saatgutes in Richtung Säschar dient. Vorteilhafterweise wird also dieser Luftstrom im Idealfall gleich dreimal ausgenutzt. Nämlich als Saatgut mitführende Zuluft aus einem zentralen Vorratsbehälter für die Säherzen, dann zur Anlagerung des Saatgutes an den Löchern der Vereinzelungsteller und schließlich ein drittes Mal beim Schießen der Körner aus dem Säherz zu den Säscharen.

Dass die Auslässe an ihrem den Vereinzelungstellern zugewandten inneren Ende eine spitz zulaufende Verlängerung aufweisen, ist als weiterer Vorschlag mit Blick auf hohe Präzision beim Herausschießen des Saatgutes aus dem Säherz zu verstehen. Die Rohre an der Innenseite der Auslässe verringern durch diese zusätzliche Maßnahme die Verluste und ermöglichen eine hohe Präzision dank des spitz zulaufenden und damit strömungsgünstig angeordneten und ausgebildeten Rohres.

Zur Ausbildung der paarweise angeordneten Vereinzelungsteller ist vorgesehen, dass zwischen den zur Anlagerung von Saatgut dienenden Löchern zur Verbesserung der Anlagerung dienende Führungen angeordnet sind. Diese Führungen erfüllen eine Doppelfunktion, indem sie einerseits das Aufnehmen und Anlagern der Körner durch die größere zur Verfügung stehende Fläche erleichtern. Andererseits kann auch ein zielgenaueres Lösen bei Unterbrechen der Luftzufuhr und ein präziseres Einschießen in die Auslässe gewährleistet werden. Wegen des Versatzes in tangentialer Richtung um den halben Abstand zwischen den Löchern liegt also bei dem Tellerpaar stets ein Loch auf einem Teller einer Führung auf dem anderen gegenüber.

Die der Verbesserung der Anlagerung dienenden Führungen weisen eine der Form der Auslässe entsprechende Ausnehmung auf oder sind entsprechend geformt. Damit ein möglichst reibungs- und verlustloser Übergang zwischen Vereinzelungsteller und den Auslässen gewährt werden kann, sollten die Führungen mit einer auf die Auslässe abgestimmten Ausnehmung versehen sein und/oder die Formgebung der Führungen sollte auf die Auslässe auch unter Berücksichtigung der Tatsache abgestimmt sein, dass die Vereinzelungsteller mit vergleichsweise hoher Geschwindigkeit drehen, wenn die Körner in Richtung Auslass freigegeben werden.

Ein weiterer Vorschlag sieht vor, dass die Führungen als sich in Richtung Außenrand des Vereinzelungstellers erweiternd erstreckende Führungsflanken ausgebildet sind. Diese Flanken erstrecken sich vorzugsweise auf dem geneigten äußeren Abschnitt der Teller und erweitern sich, bis sie am Außenrand des Tellers ihren Abschluss finden.

Zur Anordnung der Säherzen selber ist einerseits vorgesehen, dass ein Säherz jeweils einer Reiheneinheit mit zwei Doppelscheibenscharen zugeordnet ist. Dies bedeutet, wie bereits mehrfach angesprochen, dass jeweils ein Schar aus dem Säherz von einem Teller und das andere von dem damit korrespondierenden, gegenüber liegenden Teller mit Saatgut versorgt wird.

Ein Vereinzelungsteller des Säherzes weist nach einer weiteren Ausführung ein Nabenelement oder eine Flanschfläche zur Aufnahme eines Antriebsflansches und der gegenüberliegende Teller eine Öffnung zum Aufbau einer Druckdifferenz auf, so dass diese Lösung auch ohne zwei mechanisch miteinander gekoppelte Herzen auskommt. Damit ist eine vorteilhaft genaue Saatgutausgabe in einem einfach bauenden Gehäuse möglich.

Eine weitere Ausführungsform der Erfindung sieht vor, dass die Öffnung des Tellers, welche zum Aufbau einer Druckdifferenz vorsehen ist, zugleich als Durchbruch zur Befestigung des innenliegenden Mechanismus zur Luftunterbrechung ausgebildet ist. Zugleich kann die Öffnung des Tellers, welche zum Aufbau einer Druckdifferenz vorgesehen ist, als Durchbruch zur Befestigung des innenliegenden Mechanismus zur Luftunterbrechung ausgebildet sein. Hier kann beispielsweise eine Abluftleitung, welche durch die Telleröffnung in den durch die Teller gebildeten Innenraum ragt, zugleich als Lagerkonsole für den Luftunterbrechungsmechanismus dienen. Auch kann ein Haltearm für diesen Mechanismus durch die Öffnung in den Tellerinnenraum ragen.

Was den Antrieb der Vereinzelungsvorrichtung betrifft, wird vorgeschlagen, dass dem Säherz ein Antriebsmotor zugeordnet ist, welcher axial zur Rotationsachse der Teller ausgerichtet ist. Diese Positionierung ermöglicht vor allem auch eine Präzisierung der Saatgutausgabe durch die Anordnung der Vereinzelungsvorrichtung in räumlicher Nähe zur reihenweisen Ablageeinrichtung.

Die Erfindung zeichnet sich insbesondere dadurch aus, dass ein Säherz für eine pneumatische Einzelkornsämaschine geschaffen ist, das höchsten Anforderungen in Bezug auf Geschwindigkeit wie Qualität der Saat speziell beim Erzeugen gespreizter Saatgutreihen genügt. Die gespreizte Saatgutreihe erklärt sich dahingehend, dass in dieser Reihe abgelegte Saatgutkörner neben einem annähernd gleichmäßigen Längsabstand einen definierten, rechts und links wechselnden lateralen Abstand zur Reihenmitte aufweisen. Besonders vorteilhaft ist in diesem Zusammenhang ein Paar von Vereinzelungstellern als Vereinzelungsvorrichtung, die an ihrem Außenrand, tangential um einen halben Lochabstand versetzt zueinander verbunden sind. In Zusammenspiel mit einer Zuordnung eines jeweiligen Tellers zu einem separaten Auslass zum Schießen der Körner in Richtung Säschar kann somit eine optimal gespreizte Saatgutreihe abgebildet werden. Der Luftstrom wird gleich für mehrere Zwecke ausgenutzt, nämlich zum Zuführen von Luft in das Säherz, zum Anlagern der Körner an bzw. in den Löchern in dem Teller und schließlich zum Abführen der Luft samt Körnern durch die Auslässe in Richtung Säschar.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist.

Es zeigen:
- Figur 1: ein Säherz in perspektivischer Ansicht,
- Figur 2: in Seitenansicht,
- Figur 3: in Frontansicht,
- Figur 4: einen Vereinzelungsteller,
- Figur 5: eine Variante zu Figur 4,
- Figur 6: den Schnitt A-A nach Figur 5 und
- Figur 7: die Rückansicht eines Vereinzelungstellers.

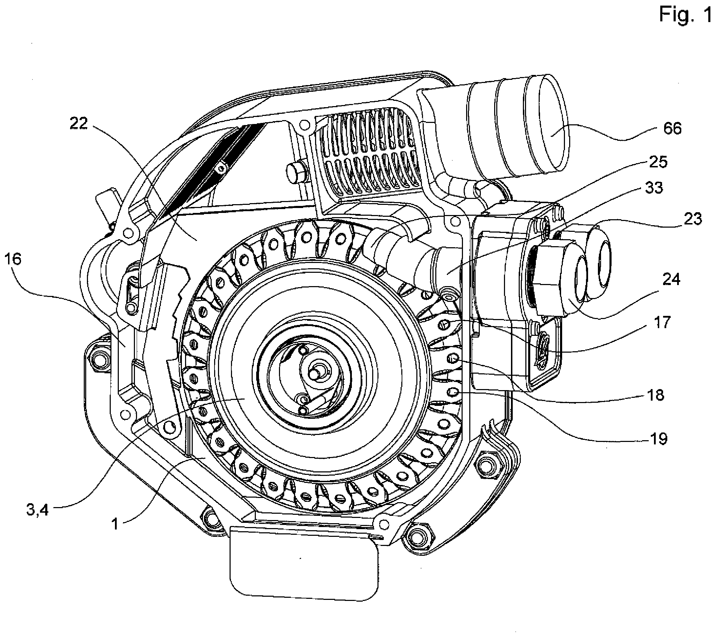

Figur 1 zeigt ein Säherz 1 mit dem Zulufteinlass 66, durch den die Saatgut enthaltende Zuluft in das Säherz 1, genauer gesagt den Außenraum 22 der Teller gelangt. Dies erfolgt beispielsweise mit einem Gebläse über ein Leitungssystem in den Zulufteinlass 66. Ebenso kann mit einem Unterdruck im Gehäuse 16 Zuluft angesaugt werden. Das Gehäuse 16 des Säherzens 1 dient vor allem zur Aufnahme der Vereinzelungsvorrichtung 3 in Form des Paars von Vereinzelungstellern, von denen hier nur der rechte erkennbar und mit dem Bezugszeichen 4 versehen ist. Diese vergleichsweise klein bauende Vereinzelungsvorrichtung 3 lässt sich vollständig in dem Gehäuse 16 unterbringen, was einen besonders effektiven Einsatz von Druckluft zum Erzeugen eines Druckgefälles möglich macht. Mit 17, 18, 19 und 20 sind beispielhaft vier Löcher in der Vereinzelungsvorrichtung 3 bezeichnet. Von dort aufgrund Unterbrechung des Luftstroms abgelöstes Saatgut gelangt letztlich durch die beiden Auslässe 23, 24 in Richtung der hier nicht dargestellten Säschare. Zwecks präziserer Übergabe des Saatgutes weisen die Auslässe 23, 24 zu ihrer Verlängerung dienende Rohre auf. In Figur 1 ist das dem Auslass 24 zugeordnete Rohr 33 erkennbar. An den Auslässen 23, 24 schließen nicht dargestellte elastische Leitungen an, welche das Saatgut von den Auslässen in die Säschare, welche vorzugsweise paarweise in einem beweglichen Rahmen angeordnet sind, weiterleiten.

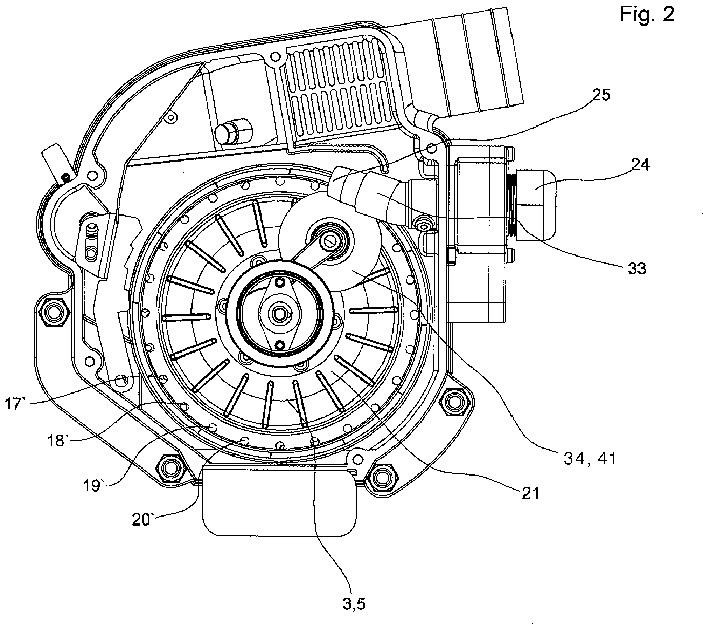

Figur 2 lässt einen Blick in den Innenraum 21 des Vereinzelungstellers 5 zu. Erkennbar ist neben den Löchern 17', 18, 19', 20' vor allem der Mechanismus 34 zur Luftstromunterbrechung, hier eine an einem Arm 67 gelagerte Rolle 41. Tritt diese Rolle 41 von innen mit den Löchern 17' - 20' etc. in Kontakt, kommt es zu Unterbrechungen des Luftstromes. Erkennbar ist auch in Figur 2 das als Verlängerung des Auslasses 24 dienende Rohr 33 zum Ausschießen des Saatgutes in Richtung der nicht dargestellten Säschare. Dieses Rohr 33 läuft an seinem dem Teller 5 zugewandten Ende 25 spitz zu, so dass ein möglichst reibungsloser und verlustarmer Übergang des Saatguts zwischen Teller 5 und Rohr 33 gewährleistet ist.

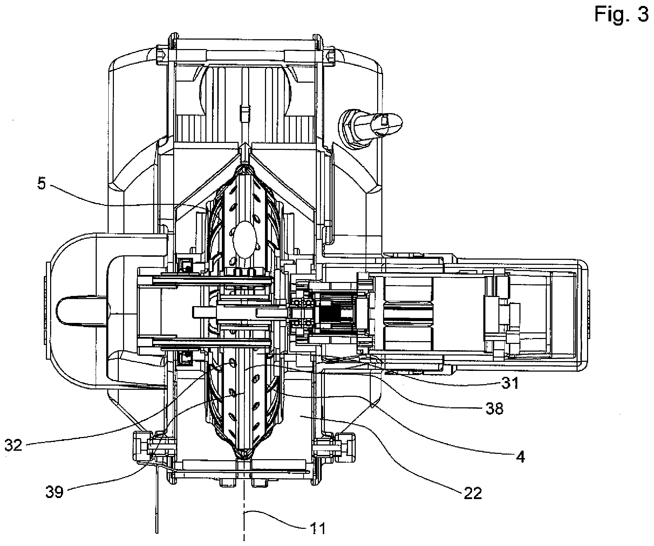

Figur 3 veranschaulicht insbesondere die Ausbildung der Vereinzelungsvorrichtung 3. Diese ist in dieser Variante der Erfindung gebildet durch ein Paar von Vereinzelungstellern 4, 5, die sich in der Rotationsebene 11, d. h. um die Rotationsachse 70 drehen und mit ihren Außenrändern 38, 39 tangential direkt versetzt miteinander verbunden sind. Die Vereinzelungsteller 4, 5 weisen jeweils einen parallel zur Rotationsebene 11 angeordneten Innenabschnitt 29 und einen geneigten Abschnitt 30 auf, der zugleich die Umfangsfläche bildet bzw. in diese übergeht. Der angesprochene Versatz entspricht einem halben Lochabstand, was mit der Erzeugung einer gespreizten Saatgutreihe korrespondiert.

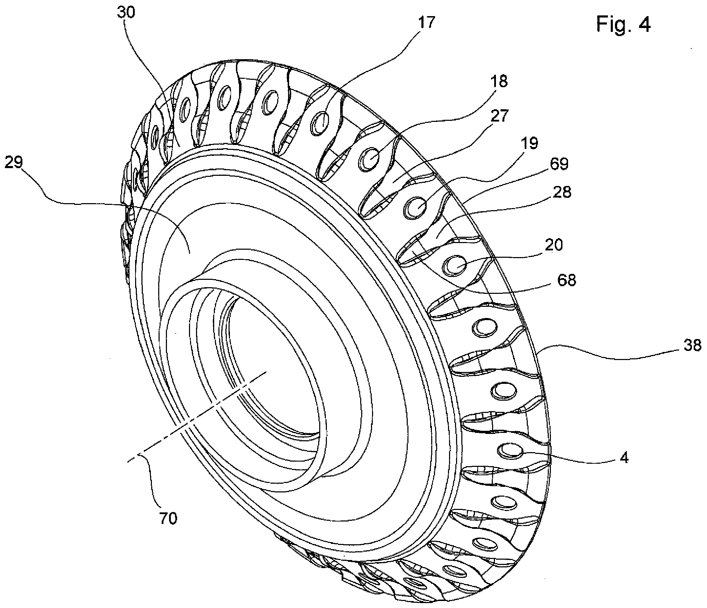

Ein Vereinzelungsteller 4 mit einer Vielzahl von Löchern, von denen wiederum vier beispielhaft mit den Bezugszeichen 17 - 20 versehen sind, ist in Figur 4 gezeigt. An der Stirnseite des Vereinzelungstellers 4 verläuft parallel zu seiner Rotationsebene 11 der Innenabschnitt 29 und der geneigt angeordnete Abschnitt 30, welcher zwischen den Löchern 17 - 20 flankenartig ausgebildete Führungen aufnimmt, von denen hier zwei mit den Bezugszeichen 27 und 28 versehen sind. Solch eine Führung 28 erstreckt sich vom inneren Ende 68 in Richtung äußerem Ende 69 in ihrer Breite zunehmend bis an den Außenrand 38 des Vereinzelungstellers 4. Hier nicht dargestellt ist naturgemäß der Versatz, der so gewählt ist, dass jeweils ein Loch auf dem einen Vereinzelungsteller 4 einer Führung auf dem korrespondierend ausgebildeten Vereinzelungsteller gegenüberliegt.

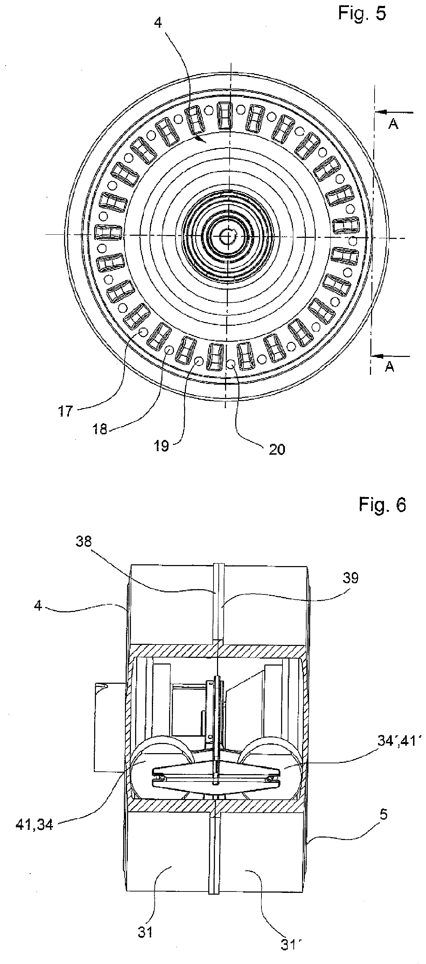

Figur 5 zeigt einen Vereinzelungsteller 3 in einer weiteren Variante, dessen in der oder zumindest annähernd parallel zu der Rotationsebene 11 verlaufende Stirnseite die Löcher 17, 18, 19, 20 aufweist.

In dem Schnitt A-A nach Figur 5 ist nun das Innenleben der Vereinzelungsvorrichtung für diese Ausführungsform der Erfindung in Figur 6 gezeigt. Die Vereinzelungsteller 4, 5 erstrecken sich in ihrer Axialrichtung im Bereich der umfangseitigen Außenwandung 31, 31', wo sie an ihren Außenrändern 38, 39 aneinanderstoßen. Mit 34, 34' ist der Mechanismus zur Luftunterbrechung in Form der Rollen bezeichnet.

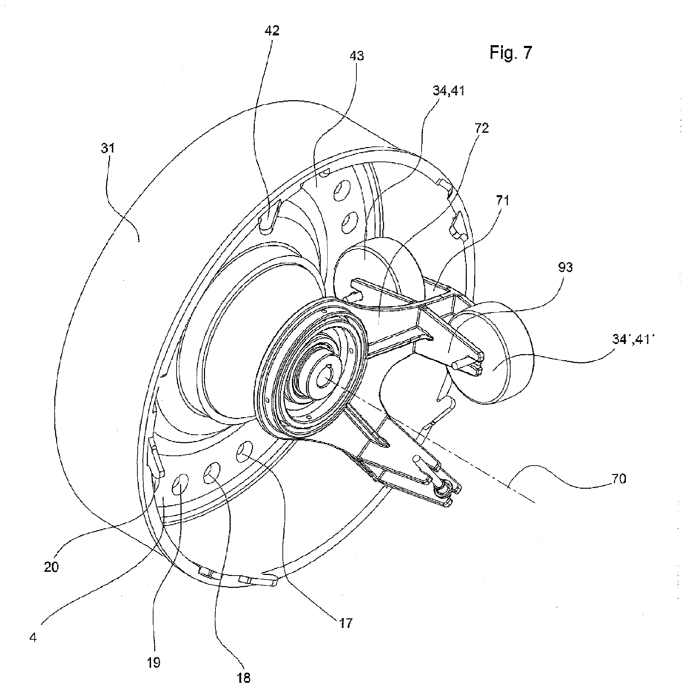

Schließlich verdeutlicht noch Figur 7 die Wirkung des Mechanismus 34, 34' nebst Tragarmen 71, 72, 73 bei Kontakt mit den Löchern 17 - 20. Diese sind ausnahmslos in der Stirnseite des Vereinzelungstellers 3 positioniert. Über die umfangseitige Außenwandung 31 erstreckt sich der Teller 3 in Richtung Rotationsachse 70. Mit 42 ist beispielhaft eines von mehreren Befestigungsmitteln bezeichnet, die sich in Zusammenspiel mit den Löchern 17 - 20 auszeichnen. Durch die Positionierung dieser Befestigungsmittel 42 und der korrespondierenden Aufnahmen 43 für diese ist zugleich die versetzte Anordnung der Löcher 17 - 20 gegenüber liegender Vereinzelungsteller 4, 5 zwangsweise vorgegeben.

## Patentansprüche

1. Säherz (1) für eine pneumatische Einzelkornsämaschine zur Aufnahme einer drehbar angeordneten, einer Druckdifferenz zwischen ihrem Innenraum (21) und ihrem Außenraum (22) ausgesetzten und eine Vielzahl von zur Anlagerung von Saatgut dienenden Löchern (17, 18, 19, 20) aufweisenden VereinzelungsVorrichtung (3), **dadurch gekennzeichnet,**
**dass** die Vereinzelungsvorrichtung (3) durch ein Paar an ihrem Außenrand (38, 39) miteinander verbundener Vereinzelungsteller (4, 5) gebildet ist, die zur Erzeugung einer gespreizten Saatgutreihe in tangentialer Richtung versetzt zueinander angeordnet und separaten Auslässen (23, 24) zur Abführung des Saatgutes aus dem Säherz (1) in Richtung Säschar zugeordnet sind.

2. Pneumatische Einzelkornsämaschine mit einer Mehrzahl von Säherzen (1) gem. Anspruch 1,
**dadurch gekennzeichnet,**
**dass** die Vereinzelungsvorrichtung (3) durch ein Paar an ihrem Außenrand (38, 39) miteinander verbundener Vereinzelungsteller (4, 5) gebildet ist, die zur Erzeugung einer gespreizten Saatgutreihe in tangentialer Richtung versetzt zueinander angeordnet und separaten Auslässen (23, 24) zur Abführung des Saatgutes aus dem Säherz (1) in Richtung Säschar zugeordnet sind.

3. Säherz nach Anspruch 1 oder 2,
**dadurch gekennzeichnet,**
**dass** die beiden Vereinzelungsteller (4, 5) in einem Maß versetzt zueinander angeordnet sind, das dem halben Abstand zwischen zwei Löchern (17, 18, 19, 20) entspricht.

4. Säherz nach Anspruch 1 oder 2,
**dadurch gekennzeichnet,**
**dass** die Vereinzelungsteller (4, 5) über einen zumindest annähernd parallel zur Rotationsebene (11) der Teller (4, 5) verlaufenden Innenabschnitt (29) und einen geneigt angeordneten und die Löcher (17, 18, 19, 20) aufweisenden Außenabschnitt (30) verfügen.

5. Säherz nach Anspruch 1 oder 2,
**dadurch gekennzeichnet,**
**dass** die Vereinzelungsteller (4, 5) über eine parallel zur Rotationsebene (11) der Teller (4, 5) verlaufende und die Löcher (17, 18, 19, 20) aufweisende Stirnseite verfügen.

6. Säherz nach Anspruch 1 oder 2,
**dadurch gekennzeichnet,**
**dass** der mittige Abstand der Auslässe (23, 24) und/oder der daran angeschlossenen Leitungen zumindest annähernd dem lateralen Abstand der herzustellenden gespreizten Saatgutreihe entspricht.

7. Säherz nach Anspruch 1 oder 2,
**dadurch gekennzeichnet,**
**dass** die Vereinzelungsteller (4, 5) paarweise über Befestigungsmittel (42) so verbindbar sind, dass die in gegenüber liegenden Vereinzelungstellern (4, 5) vorgesehenen Löcher (17, 18, 19, 20) im montierten Zustand versetzt zueinander angeordnet sind.

8. Säherz nach Anspruch 1 oder 2,
**dadurch gekennzeichnet,**
**dass** das Paar von Vereinzelungstellern (4, 5) mit einem innenliegenden Mechanismus (34) zur Luftunterbrechung ausgerüstet ist.

9. Säherz nach Anspruch 8,
**dadurch gekennzeichnet,**
**dass** der innenliegende Mechanismus (34) zur Luftunterbrechung als gefederte oder zumindest teilweise elastisch ausgebildete Rolle (41) oder als gefederter Rollenmechanismus ausgeführt ist.

10. Säherz nach Anspruch 9,
**dadurch gekennzeichnet,**
**dass** der innenliegende Mechanismus (34) zur Luftunterbrechung als zumindest ein Paar von gefederten oder zumindest teilweise elastisch ausgebildeten Rollen (41) oder als gefederter Rollenmechanismus ausgeführt ist, wobei jeweils eine Rolle (41) des Rollenpaares der jeweiligen Innenfläche des Vereinzelungstellers (4, 5) zugeordnet ist.

11. Säherz nach Anspruch 9,
**dadurch gekennzeichnet,**
**dass** der innenliegende Mechanismus (34) zur Luftunterbrechung als zumindest ein Paar von gefederten oder zumindest teilweise elastisch ausgebildeten Rollen (41) oder als gefederter Rollenmechanismus ausgeführt ist, wobei die Rollen (41) des Rollenpaares sich an der der jeweiligen Innenfläche des Vereinzelungstellers (4,5) gegenüberliegenden Seite berühren.

12. Säherz nach Anspruch 9,
**dadurch gekennzeichnet,**
**dass** der innenliegende Mechanismus (34) zur Luftunterbrechung als gefederte oder zumindest teilweise elastisch ausgebildete Rolle (41) oder als gefederter Rollenmechanismus ausgeführt ist, wobei die Rolle mit Erhebungen versehen ist, welche zumindest teilweise formschlüssig in die Löcher (17, 18, 19, 20) eingreifen.

13. Säherz nach Anspruch 1 oder 2,
**dadurch gekennzeichnet,**
**dass** ein Luftstrom als Zuluft in das Säherz (1), zur Anlagerung des Saatgutes an den Löchern (17, 18, 19, 20) und/oder zur Abführung des Saatgutes in Richtung Säschar dient.

14. Säherz nach Anspruch 1 oder 2,
**dadurch gekennzeichnet,**
**dass** die Auslässe (23, 24) an ihrem den Vereinzelungstellern (4, 5) zugewandten Ende (25) eine spitz zulaufende Verlängerung (33) aufweisen.

15. Säherz nach Anspruch 1 oder 2,
**dadurch gekennzeichnet,**
**dass** zwischen den zur Anlagerung von Saatgut dienenden Löchern (17, 18, 19, 20) zur Verbesserung der Anlagerung dienende Führungen (27, 28) angeordnet sind.

16. Säherz nach Anspruch 15,
**dadurch gekennzeichnet,**
**dass** die Führungen (27, 28) eine der Form der Auslässe (23, 24) entsprechende Ausnehmung aufweisen oder entsprechend geformt sind.

17. Säherz nach Anspruch 15,
**dadurch gekennzeichnet,**
**dass** die Führungen (27, 28) als sich in Richtung Außenrand (38) des Vereinzelungstellers (4) erweiternd erstreckende Führungsflanken ausgebildet sind.

18. Säherz nach Anspruch 2,
**dadurch gekennzeichnet,**
**dass** ein Säherz (1) jeweils einer Reiheneinheit mit zwei Doppelscheibenscharen zugeordnet ist.

19. Säherz nach Anspruch 1 oder 2,
**dadurch gekennzeichnet,**
**dass** ein Vereinzelungsteller (4) des Säherzes (1) ein Nabenelement oder eine Flanschfläche zur Aufnahme eines Antriebsflansches und der gegenüberliegende Teller (5) eine Öffnung zum Aufbau einer Druckdifferenz aufweist.

20. Säherz nach Anspruch 19,
**dadurch gekennzeichnet,**
**dass** die Öffnung des Tellers (5), welche zum Aufbau einer Druckdifferenz vorsehen ist, zugleich als Durchbruch zur Befestigung des innenliegenden Mechanismus (34,35) zur Luftunterbrechung ausgebildet ist.

21. Säherz nach Anspruch 1 oder 2,
**dadurch gekennzeichnet,**
**dass** dem Säherz (1) ein Antriebsmotor zugeordnet ist, welcher axial zur Rotationsachse (70) der Teller (4, 5) ausgerichtet ist.

## Claims

1. Seeding heart (1) for a pneumatic precision seed drill for holding a pivoting arranged, exposed to a pressure difference between their inner space (21) and their exterior space (22) and having a multiplicity of holes (17,18,19, 20) serving for the accumulation of seeds separating device (3),
**characterised in that**
the separating device (3) is formed by a pair of separating plates (4,5) connected to one another at their outer edge (38,39) that are arranged offset in a tangential direction to one another to produce a spread seed row and are assigned to separate outlets (23, 24) for the discharge of the seed from the seeding heart (1) in the direction of the sowing coulter.

2. Pneumatic precision seed drill with a multiplicity of seed hearts (1) according with claim 1,
**characterised in that**
the separating device (3) is formed by a pair of separating plates (4,5) connected to one another at their outer edge (38,39) that are arranged offset in a tangential direction to one another to produce a spread seed row and are assigned to separate outlets (23, 24) for the discharge of the seed from the seeding heart (1) in the direction of the sowing coulter.

3. Seeding heart (1) in accordance with claim 1 or 2,
**characterised in that**
the two separating plates (4, 5) are arranged offset to one another to an extent that corresponds to half the spacing between two holes (17,18,19, 20).

4. Seeding heart in accordance with claim 1 or 2,
**characterised in that**
the separating plates (4, 5) have an inside section (29) running at least approximately parallel to the rotation plane (11) of the plates (4, 5) and an outer section (30) arranged slanted and having the holes (17,18,19, 20).

5. Seeding heart in accordance with claim 1 or 2,
**characterised in that**
the separating plates (4, 5) have an end face running parallel to the rotation plane (11) of the plates (4,5) and having the holes (17,18,19, 20).

6. Seeding heart in accordance with claim 1 or 2,
**characterised in that**
central spacing of the outlets (23, 24) and/or the pipes connected to them corresponds at least approximately to the lateral spacing of the spread seed row that is to be produced.

7. Seeding heart in accordance with claim 1 or 2,
**characterised in that**
the separating plates (4, 5) can be connected in pairs via fasteners (42) in such a way that the holes (17,18,19,20) provided in facing separating plates (4, 5) are aligned offset to one another in the assembled condition.

8. Seeding heart in accordance with claim 1 or 2,
**characterised in that**
the pair of separating plates (4, 5) is fitted with an interior mechanism (34) for interrupting the airflow.

9. Seeding heart in accordance with claim 8,
**characterised in that**
the interior mechanism (34) for interrupting the airflow is realised as a spring-mounted or at least partly elastic roller (41) or as a spring-mounted roller mechanism.

10. Seeding heart in accordance with claim 9,
**characterised in that**
the interior mechanism (34) for interrupting the airflow is realised as at least a pair of spring-mounted or at least partly elastic rollers (41) or as a spring-mounted roller mechanism, whereby in each case one roller (41) of the roller pair is assigned to the respective inner surface of the separating plate (4, 5).

11. Seeding heart in accordance with claim 9,
**characterised in that**
the interior mechanism (34) for interrupting the airflow is realised as at least a pair of spring-mounted or at least partly elastic rollers (41) or as a spring-mounted roller mechanism, whereby the rollers (41) of the roller pair are in contact on the side opposite at the respective inner surface of the separating plate (4, 5).

12. Seeding heart in accordance with claim 9,
**characterised in that**
the interior mechanism (34) for interrupting the airflow is realised as a spring-mounted or at least partly elastic roller (41) or as a spring-mounted roller mechanism whereby the roller has elevations that engage at least party positively into the holes (17,18,19, 20).

13. Seeding heart in accordance with claim 1 or 2,
**characterised in that**
an air flow serves as supply air in the seeding heart (1) for accumulating the seed at the holes (17,18,19,20) and/or for discharging the seed in the direction of the sowing coulter.

14. Seeding heart in accordance with claim 1 or 2,
**characterised in that**
the outlets (23, 24) have a tapering extension (33) at their end (25) towards the separating plates (4, 5).

15. Seeding heart in accordance with claim 1 or 2,
**characterised in that**
guides (27, 28) to improve accumulation are arranged between the holes (17,18,19, 20) serving for the accumulation of seeds.

16. Seeding heart in accordance with claim 15,
**characterised in that**
the guides (27,28) have a recess corresponding to the shape of the outlets (23, 24) or are shaped accordingly.

17. Seeding heart in accordance with claim 15,
**characterised in that**
the guides (27, 28) are designed as guide edges extending in the direction of the outer edge (38) of the separating plate (4).

18. Seeding heart in accordance with claim 2,
**characterised in that**
a seeding heart (1) is assigned in each case to a row unit with two double disc coulters.

19. Seeding heart in accordance with claim 1 or 2,
**characterised in that**
one separating plate (4) of the seeding heart (1) has a hub element or a flange surface for holding a drive flange and the opposite plate (5) has an opening for building up a pressure difference.

20. Seeding heart in accordance with claim 192,
**characterised in that** t
the opening of the plate (5) that is provided for building up a pressure difference is designed at the same time as a cutout for fastening the interior mechanism (34, 35) for interrupting the air flow.

21. Seeding heart in accordance with claim 1 or 2,
**characterised in that**
a drive motor is assigned to the seeding heart (1) that is aligned axially to the rotation axis (70) of the plates (4, 5).

## Revendications

1. Coeur de semoir (1) pour un semoir pneumatique à grains individuels pour le logement d'un dispositif de séparation (3) rotatif, soumis à une différence de pression entre son intérieur (21) et son extérieur (22) et comprenant à une pluralité de trous (17, 18, 19, 20) servant à l'accumulation de semence,
**caractérisé en ce que**
le dispositif de séparation (3) est constitué d'une paire de plateaux de séparation (4, 5) reliées entre eux au niveau de leur bord externe (38, 39), qui, pour la réalisation d'une rangée de semence étalée, sont disposés de manière décalée dans la direction tangentielle entre eux et correspondent à des sorties séparées (23, 24) pour l'évacuation de la semence hors du coeur de semoir (1) en direction du soc de semoir.

2. Semoir pneumatique à grains individuels avec une pluralité de coeurs de semoirs (1) selon la revendication 1,
le dispositif de séparation (3) est constitué d'une paire de plateaux de séparation (4, 5) reliées entre eux au niveau de leur bord externe (38, 39), qui, pour la réalisation d'une rangée de semence étalée, sont disposés de manière décalée dans la direction tangentielle entre eux et correspondent à des sorties séparées (23, 24) pour l'évacuation de la semence hors du coeur de semoir (1) en direction du soc de semoir.

3. Coeur de semoir selon la revendication 1 ou 2,
**caractérisé en ce que**
les deux plateaux de séparation (4, 5) sont disposés de manière décalée entre eux de façon à ce que cela corresponde à la moitié de la distance entre deux trous (17, 18, 19, 20).

4. Coeur de semoir selon la revendication 1 ou 2,
**caractérisé en ce que**
les plateaux de séparation (4, 5) sont munis d'une portion interne (29) s'étendant au moins approximativement parallèlement au plan de rotation (11) des plateaux (4, 5) et d'une portion externe (30) inclinée et comprenant les trous (17, 18, 19, 20).

5. Coeur de semoir selon la revendication 1 ou 2,
**caractérisé en ce que**
les plateaux de séparation (4, 5) sont munis d'une face frontale s'étendant parallèlement au plan de rotation (11) des plateaux (4, 5) et comprenant les trous (17, 18, 19, 20).

6. Coeur de semoir selon la revendication 1 ou 2,
**caractérisé en ce que**
la distance moyenne des sorties (23, 24) et/ou des conduites qui y sont raccordées correspond au moins approximativement à la distance latérale de la rangée de semence étalée à réaliser.

7. Coeur de semoir selon la revendication 1 ou 2,
**caractérisé en ce que**
les plateaux de séparation (4, 5) peuvent être reliés par paires par l'intermédiaire de moyens de fixation (42) de façon à ce que les trous (17, 18, 19, 20) prévus dans des plateaux de séparation (4, 5) opposés soient disposés de manière décalée entre eux dans l'état monté.

8. Coeur de semoir selon la revendication 1 ou 2,
**caractérisé en ce que**
la paire de plateaux de séparation (4, 5) est équipée d'un mécanisme interne (34) pour la coupure d'air.

9. Coeur de semoir selon la revendication 8,
**caractérisé en ce que**
le mécanisme interne (34) pour la coupure d'air est conçu comme un rouleau monté sur ressort ou au moins partiellement élastique (41) ou comme un mécanisme à rouleaux montés sur ressorts.

10. Coeur de semoir selon la revendication 9,
**caractérisé en ce que**
le mécanisme interne (34) pour la coupure d'air est conçu comme au moins une paire de rouleaux montés sur ressorts ou au moins partiellement élastiques (41) ou comme un mécanisme à rouleaux monté sur ressort, un rouleau (41) de la paire de rouleau correspondant à la surface interne correspondante du plateau de séparation (4, 5).

11. Coeur de semoir selon la revendication 9,
**caractérisé en ce que**
le mécanisme interne (34) pour la coupure d'air est conçu comme au moins une paire de rouleaux montés sur ressorts ou au moins partiellement élastiques (41) ou comme un mécanisme à rouleaux monté sur ressort, les rouleaux (41) de la paire de rouleau étant en contact entre eux au niveau du côté opposé à la surface interne correspondante du plateau de séparation (4, 5).

12. Coeur de semoir selon la revendication 9,
**caractérisé en ce que**
le mécanisme interne (34) pour la coupure d'air est conçu comme un rouleau monté sur ressort ou au moins partiellement élastique (41) ou comme un mécanisme à rouleaux montés sur ressorts, le ressort étant muni de bossages qui s'emboîtent au moins partiellement par complémentarité de forme dans les tours (17, 18, 19, 20).

13. Coeur de semoir selon la revendication 1 ou 2,
**caractérisé en ce que**
un flux d'air permet l'introduction d'air dans le coeur de semoir (1), pour l'accumulation de ma semence au niveau des trous (17, 18, 19, 20) et/ou pour l'évacuation de la semence en direction du soc de semoir.

14. Coeur de semoir selon la revendication 1 ou 2,
**caractérisé en ce que**
les sorties (23, 24) comprennent, au niveau, de leur extrémité (25), orientée vers les plateaux de séparation (4, 5), un prolongement pointu (33).

15. Coeur de semoir selon la revendication 1 ou 2,
**caractérisé en ce que**
entre les trous (17, 18, 19, 20) permettant l'accumulation de la semence sont disposés des guidages (27, 28) permettant d'améliorer l'accumulation.

16. Coeur de semoir selon la revendication 15,
**caractérisé en ce que**
les guidages (27, 28) présentent une cavité correspondant à la forme des sorties (23, 24) ou sont formés de manière adaptée.

17. Coeur de semoir selon la revendication 15,
**caractérisé en ce que**
les guidages (27, 28) sont conçus comme des flancs de guidage s'étendant en s'élargissant en direction du bord externe (38) du plateau de séparation (4).

18. Coeur de semoir selon la revendication 2,
**caractérisé en ce que**
un coeur de semoir (1) est muni d'une unité de rangée avec deux socs à doubles disques.

19. Coeur de semoir selon la revendication 1 ou 2,
**caractérisé en ce que**
un plateau de séparation (4) du coeur de semoir (1) comprend un élément de moyeu ou une surface de bride pour le logement d'une bride d'entraînement et le plateau opposé (5) comprend une ouverture pour l'établissement d'une différence de pression.

20. Coeur de semoir selon la revendication 19,
**caractérisé en ce que**
l'ouverture du plateau (5), qui est prévue pour l'établissement d'une différence de pression, est également conçue pour la fixation du mécanisme interne (34, 35) pour la coupure d'air.

21. Coeur de semoir selon la revendication 1 ou 2,
**caractérisé en ce que**
le coeur de semoir (1) comprend un moteur d'entraînement qui est orienté axialement par rapport à l'axe de rotation (70) des plateaux (4, 5).
